(19) Europäisches Patentamt

European Patent Office

Office européen des brevets

(11) **EP 1 482 648 B1**

(12) **FASCICULE DE BREVET EUROPEEN**

(45) Date de publication et mention
de la délivrance du brevet:
**25.01.2006 Bulletin 2006/04**

(51) Int Cl.:
*H04B 1/69* (2006.01)

(21) Numéro de dépôt: **04102256.7**

(22) Date de dépôt: **24.05.2004**

(54) **Récepteur de signal ultra large bande et procédé de réception associé**

Ultrabreitbandempfänger und entsprechendes Empfangsverfahren

Ultra wide band receiver and corresponding reception method

(84) Etats contractants désignés:
**AT BE BG CH CY CZ DE DK EE ES FI FR GB GR
HU IE IT LI LU MC NL PL PT RO SE SI SK TR**

(30) Priorité: **26.05.2003 FR 0350175**

(43) Date de publication de la demande:
**01.12.2004 Bulletin 2004/49**

(73) Titulaire: **COMMISSARIAT A L'ENERGIE
ATOMIQUE
75752 Paris Cédex 15 (FR)**

(72) Inventeurs:
• **DE RIVAZ, Sébastien
73000, CHAMBERY (FR)**
• **MORCHE, Dominique
38240, MEYLAN (FR)**
• **PEZZIN, Manuel
38000, GRENOBLE (FR)**
• **KEIGNART, Julien
38100, GRENOBLE (FR)**

(74) Mandataire: **Poulin, Gérard
Brevatome
3, rue du Docteur Lancereaux
75008 Paris (FR)**

(56) Documents cités:
**US-A1- 2002 167 991**

• **O'DONNEL ET AL: "An integrated, low power,
ultra-wideband transceiver architecture for
low-rate, indoor wireless systems" IEEE CAS
WORKSHOP ON WIRELESS COMMUNICATIONS
AND NETWORKING, 4 septembre 2002
(2002-09-04), - 5 septembre 2002 (2002-09-05)
pages 1-8, XP002269840 New York, USA**

EP 1 482 648 B1

## Description

Domaine technique et art antérieur

L'invention concerne un récepteur de signal ultra large bande ainsi qu'un procédé de réception de signal ultra large bande.

L'invention concerne également un système de transmission ultra large bande ainsi qu'un procédé de transmission de signal ultra large bande.

La transmission d'informations par impulsions radio ultra large bande, plus communément appelé transmission UWB (UWB pour « Ultra Wide Band »), s'applique, entre autres, aux transmissions à haut débit, par exemple entre 1 Mbits/s et 1 Gbits/s, ainsi qu'au positionnement d'émetteurs/récepteurs (applications radar et télécommunications). La largeur de bande B des signaux transmis peut varier, par exemple, de 500Mz à plusieurs Gigahertz.

Un système de transmission ultra large bande émet des séquences d'impulsions, de période moyenne d'émission communément appelée période PRP (« Pulse Repetition Period ») et dont la position et/ou l'amplitude et/ou la phase sont porteuses d'information. Lorsque l'information est modulée en position on parle de modulation PPM (« Pulse Position Modulation »).

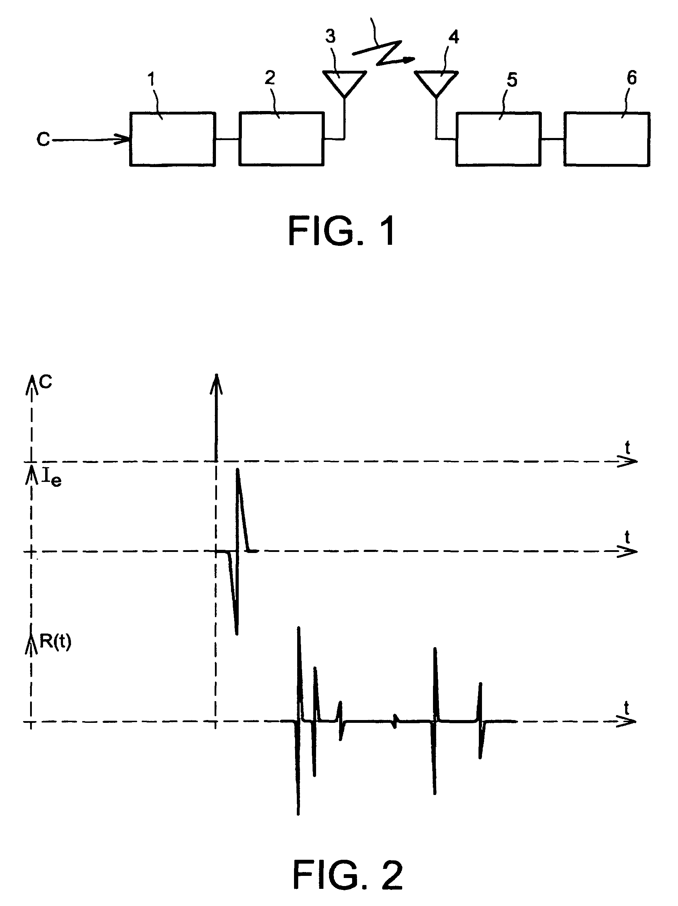

Un système de transmission UWB est représenté en figure 1. Le système comprend des circuits d'émission et des circuits de réception. Les circuits d'émission comprennent un générateur d'impulsions 1, une interface radiofréquence d'émission 2 (« Tx Front-end » en langue anglaise) et une antenne 3. Des impulsions Ie sont émises sous l'action de consignes C appliquées au générateur d'impulsion 1. Les circuits de réception comprennent une antenne 4, une interface radiofréquence de réception 5 (« Rx Front-end » en langue anglaise) et un récepteur 6. Entre les circuits d'émission et les circuits de réception se situe le canal de propagation dans lequel les impulsions émises Ie se propagent.

La figure 2 représente les positions temporelles et les amplitudes respectives d'un signal de consigne C, d'une impulsion Ie émise sous l'action du signal de consigne C et du signal reçu R(t) qui correspond à l'impulsion émise Ie. L'impulsion émise Ie subit l'effet du canal de transmission. Cet effet se modélise par une série de réflexions multiples qui dépendent de la configuration géométrique de l'environnement de propagation. Cela se traduit par un étalement du signal reçu R(t) sous la forme d'une suite d'impulsions pondérées dont la position et l'amplitude dépendent du canal.

De façon plus générale, le signal émis est constitué d'une suite d'impulsions « physiques » de forme stationnaire. Les impulsions émises sont dites « physiques » dans la mesure où elles ont une forme particulière et une largeur L non nulle dépendant de la bande passante B utilisée pour la communication, L étant sensiblement égale à 1/B. Par opposition, les impulsions « idéales », ou impulsions de Dirac, sont des impulsions de largeur nulle. L'émission des impulsions est réalisée par le générateur d'impulsions 1, de réponse impulsionnelle e(t), qui reçoit les consignes C. Le signal émis par le générateur d'impulsions 1, c'est-à-dire la suite d'impulsions physiques émises par le générateur d'impulsions 1, subit l'effet des interfaces (amplificateurs, filtres, etc.), de l'antenne d'émission 3 et du canal de propagation supposé quasi stationnaire.

Le signal reçu R(t) est constitué d'une suite d'impulsions pondérées de largeur très courte et dont la position et l'amplitude sont déterminées par l'émetteur et par le canal de transmission. Le signal R(t) peut ainsi être modélisé par un élément déterministe, résultat de la convolution du signal e(t) avec la réponse impulsionnelle h(t) du canal. La réponse h(t) du canal s'entend au sens large, c'est-à-dire comprenant les composants radiofréquences (interfaces radiofréquence et antennes d'émission et de réception) et le canal de propagation.

Il vient :

$R(t) = e(t) \otimes h(t)$ où le symbole « $\otimes$ » désigne l'opération « produit de convolution ».

Les réponses impulsionnelles reçues qui correspondent à deux impulsions émises différentes peuvent se recouvrir lorsque la durée qui sépare l'émission des deux impulsions est inférieure à l'étalement des réponses impulsionnelles. Au recouvrement temporel entre impulsions, peut également s'ajouter un élément aléatoire i(t) représentant les interférences électromagnétiques et/ou thermiques ainsi que les aléas sur la fonction h(t).

La consigne d'émission est une suite d'impulsions C répétées périodiquement. La période PRP de répétition des impulsions constitue une référence de temps pour le système d'émission/réception.

La transmission d'informations repose sur une modulation de position et/ou d'amplitude et/ou de phase des impulsions émises. La modulation de position est obtenue par un décalage temporel de l'impulsion émise par rapport à une référence de temps. La modulation d'amplitude est obtenue par application d'un coefficient sur le niveau d'amplitude d'une impulsion de référence. La modulation de phase est obtenue par modification de la forme de l'impulsion émise.

L'émission d'une impulsion (modulée ou non) constitue, à la réception, une trame physique que l'on réfère à une position temporelle nominale (début de la période PRP) et à une amplitude nominale de référence. Par « trame physique » il faut entendre le signal reçu par le récepteur dans une fenêtre temporelle dont la durée est égale à la somme de la durée maximale d'étalement des réponses impulsionnelles reçues et de la durée maximale de la modulation de position.

Une phase de transmission ultra large bande requiert une phase d'initialisation dont la fonction principale est de synchroniser les trames physiques, c'est-à-dire de déterminer la connaissance du temps d'arrivée de chaque trame physique. Ce temps d'arrivée correspond aux instants nominaux de la période PRP décalés temporellement du délai de propagation dû au canal.

Lorsque le canal de propagation est réduit, c'est-à-dire du type à trajet direct en espace libre (« Line Of Sight » ou « LOS » en langue anglaise), l'impulsion UWB reçue a une forme temporelle localisée étroite de largeur Tp=1/B (B étant la largeur de bande de l'impulsion reçue), par exemple quelques centaines de picosecondes.

Dans une configuration de propagation plus générale, du type à trajets multiples (« Non-Line Of Sight » ou NLOS en langue anglaise), le signal est étalé, sur une durée plus longue que celle de sa largeur temporelle initiale, sous forme d'une suite d'impulsions pondérées. Il faut ici noter que, alors que chaque trajet peut individuellement varier assez rapidement en position et en amplitude, le signal étalé demeure, dans son ensemble, relativement stationnaire.

Différents problèmes relatifs aux récepteurs ultra large bande vont maintenant être décrits.

Un premier problème est celui de la localisation temporelle précise des impulsions reçues. En effet, une connaissance précise de l'impulsion reçue économise sur la capacité de traitement du récepteur, puisqu'il n'est alors pas nécessaire d'extraire l'information de là où on sait qu'elle est absente. Ce point peut être très important en terme de faisabilité matérielle. Une connaissance précise de la position temporelle de chacun des trajets multiples de propagation est ainsi requise.

Un deuxième problème est celui du maintien d'un niveau de Rapport Signal sur Bruit (RSB) optimal. Il est en effet nécessaire de récupérer le maximum de l'énergie du signal émis qui est temporellement dispersée par le canal de propagation. L'estimation du canal de propagation doit donc être robuste vis-à-vis des changements du canal.

Un troisième problème consiste à déterminer avec précision les coefficients de pondération de chacun des trajets. A cette fin, un large consensus existe actuellement chez les développeurs de transmissions UWB pour exploiter la connaissance de la réponse impulsionnelle du canal. La plupart des solutions existantes utilisent ainsi le principe d'un filtrage du signal reçu à l'aide d'un signal qui est lui-même issu du signal reçu. Afin d'optimiser le filtrage, au sens d'une combinaison à gain maximal (« Maximum Ratio Combining » ou MRC), en plus d'une connaissance précise des positions temporelles des multi-trajets, une connaissance précise des amplitudes des multi-trajets est également requise. L'objectif est alors d'affecter à chacun des multi-trajets du signal à démoduler la pondération qui lui correspond pour ne pas dégrader le RSB. Un filtre idéal est ainsi un filtre qui exploite l'ensemble des trajets avec une précision temporelle infinie et une connaissance de la pondération ayant une précision infinie.

Le filtrage consiste en une corrélation du signal reçu avec un signal de référence qui est l'image de la réponse impulsionnelle du canal. La plupart des solutions existantes mettent en oeuvre ce principe de filtrage, selon deux variantes principales.

Une première variante se fonde sur un traitement de type différentiel. Une impulsion reçue est alors multipliée par la précédente retardée et intégrée sur toute la durée de son étalement. Dans une situation de signal non ou peu bruité, le signal courant et le signal retardé ont alors la même forme. L'opération approche un filtrage adapté idéal, au sens d'une combinaison MRC, puisque le filtre idéal est celui dont les coefficients sont le signal lui-même. Par contre, dans la situation plus réaliste de signal bruité, la dégradation du RSB est rapide dès que le niveau de bruit en aval du traitement augmente puisque les coefficients du filtre sont largement dégradés.

Une deuxième variante permet avantageusement de s'affranchir du bruit au niveau du signal de corrélation. L'estimation du canal est analysée en temps différé et en parallèle afin d'être dé-bruitée en un signal de référence pour la corrélation.

Les architectures de récepteurs ainsi que les traitements associés doivent alors être capables, à la fois, d'estimer le canal et de comparer le signal reçu avec un signal de référence afin d'en extraire l'information de modulation.

Le brevet US 2002/0075972 Al divulgue un mode de réalisation de cette deuxième variante. L'estimation du canal est effectuée en détectant un maximum de multi-trajets en position et en amplitude. La précision temporelle de l'estimation respecte le critère de Nyquist, c'est-à-dire qu'elle est inférieure ou égale à la moitié de l'inverse de la bande passante du signal. Les positions des multi-trajets étant connues, le signal reçu est échantillonné ponctuellement aux instants adéquats. Cet échantillonnage est effectué par un récepteur de type RAKE qui met en oeuvre un parallélisme élevé. Afin d'améliorer le gain de traitement global, l'échantillonnage est précédé d'un filtrage adapté à la forme de l'impulsion, ce qui suppose cette forme connue a priori. Un inconvénient de ce filtrage est que la forme de l'impulsion reçue n'est pas nécessairement conforme à l'impulsion escomptée du fait des modifications dues aux imperfections des composants traversés. L'estimation du canal se traduit par une recherche des multi-trajets dont la connaissance constitue le signal de référence pour la corrélation.

Un autre inconvénient du récepteur divulgué dans le brevet US 2002/0075972 est la nécessité de mettre en parallèle un nombre élevé de circuits de réception de l'interface radiofréquence, ce qui conduit à une consommation électrique élevée et à une complexité des circuits électroniques.

La nécessité de cette mise en parallèle a deux origines. D'une part, il est nécessaire de dupliquer la fonction de réception en deux sous fonctions matérielles, l'une cherchant les multi-trajets (communément appelée « scanning ») et l'autre lisant le signal reçu courant (communément appelée « tracking »). D'autre part, dans le cas d'une modulation N-PPM (N-PPM pour « N-Pulse Position Modulation »), il est nécessaire de lire, dans les mêmes fenêtres temporelles, des positions de modulation dont les valeurs nominales sont déterminées et réparties sur une échelle discrète et des positions de multi-trajet qui, bien que connues grâce au « scanning », sont aléatoirement réparties sur une échelle temporelle continue. Il s'en suit une duplication nécessaire des circuits de réception.

Le document intitulé « *An Integrated, Low Power, Ultra-Wideband Transcei ver Architecture For Low-Rate, Indoor Wireless Systems* » (Ian D. O'Donnell, Mikes S.W. Chen, Stanley B.T. Wang, Robert W. Brodersen ; IEEE CAS Workshop on Wireless Communications and Networking ; Pasadena, Sept. 4-5th 2002) illustre un autre mode de réalisation de cette deuxième variante. Il faut cependant noter que la solution proposée ici se limite à un traitement direct dans une bande de base relativement étroite (0-1GHz) et à la transmission de faibles débits. Le traitement est effectué en « tout numérique ». L'estimation du canal s'effectue par un traitement numérique des signaux échantillonnés à la fréquence de Nyquist, soit deux fois la bande passante. Typiquement ce traitement consiste à faire la moyenne du signal reçu cycliquement sur plusieurs impulsions successives.

Les solutions mentionnées ci-dessus présentent de nombreux inconvénients (échantillonnage à fréquence élevée, forte consommation, Rapport Signal à Bruit médiocre, etc.). L'invention ne présente pas les inconvénients mentionnés ci-dessus.

Exposé de l'invention

En effet, l'invention concerne un récepteur de signal ultra large bande (R(t)) constitué d'une succession d'impulsions, le récepteur comprenant des moyens pour délivrer des informations d'amplitude (Va) et/ou de phase (Vφ) relatives aux impulsions reçues, par corrélation du signal reçu (R(t)) avec un signal de référence (ref(k)), caractérisé en ce que lesdits moyens comprennent :

- des moyens pour délivrer deux signaux orthogonaux par projection du signal reçu (R(t)) sur deux fonctions orthogonales périodiques (a, b) de fréquence fp sensiblement égale à la fréquence centrale fc du signal reçu,
- des moyens d'échantillonnage des deux signaux orthogonaux pour délivrer un flux de données discrètes (d(k)), chaque donnée discrète ayant deux composantes (X(k), Y(k)),
- des moyens d'estimation pour calculer le signal de référence (ref(k)) à partir du flux de données discrètes (d(k)), et
- des moyens de comparaison qui délivrent les informations d'amplitude (Va) et/ou de phase (Vφ) relatives aux impulsions reçues par comparaison de tout ou partie des données contenues dans le flux de données discrètes (d(k)) avec tout ou partie d'un ensemble de données (Xr(0), Xr(1), ..., Xr(n), Yr(0), Yr(1), ..., Yr(n)) constituant le signal de référence (ref(k)).

Selon une caractéristique supplémentaire de l'invention, le récepteur comprend un circuit de décodage et d'intégration cohérente pour réduire le bruit des données discrètes (d(k)) délivrées par les moyens d'échantillonnage.

Selon encore une caractéristique supplémentaire de l'invention, les moyens de comparaison comprennent des bancs de filtres à réponse impulsionnelle finie dont les coefficients sont des données qui constituent le signal de référence (ref(k)).

Selon encore une caractéristique supplémentaire de l'invention, le récepteur comprend des filtres passe-bas placés entre les moyens pour délivrer les deux signaux orthogonaux et les moyens d'échantillonnage et dont la fréquence de coupure est sensiblement égale à la moitié de la largeur de bande du signal reçu (R(t)).

Selon encore une caractéristique supplémentaire de l'invention, les filtres passe-bas (15, 16) sont des filtres égaliseurs.

Selon encore une caractéristique supplémentaire de l'invention, la fréquence d'échantillonnage des moyens d'échantillonnage est sensiblement égale à fp/K3, où K3 est un nombre rationnel.

Selon encore une caractéristique supplémentaire de l'invention, les moyens d'échantillonnage sont commandés par une commande apériodique.

Selon encore une caractéristique supplémentaire de l'invention, les moyens d'estimation pour calculer le signal de référence (ref(k)) calculent une moyenne cohérente sur des trames physiques du signal reçu.

Selon encore une caractéristique supplémentaire de l'invention, le récepteur comprend au moins un filtre coupe-bande placé en amont des moyens pour délivrer les deux signaux orthogonaux et dont la fréquence centrale est dans la bande passante du signal reçu (R(t)).

Selon encore une caractéristique supplémentaire de l'invention, au moins un filtre coupe-bande est centré sur la fréquence centrale fc du signal reçu.

Selon encore une caractéristique supplémentaire de l'invention, le récepteur comprend un circuit de détection de signal qui calcule une norme d'au moins une donnée discrète (d(k)) et un étage de décision, monté en série avec le circuit de détection, pour décider si, oui ou non, un traitement du signal reçu associé à la donnée discrète doit être effectué ou non.

Selon encore une caractéristique supplémentaire de l'invention, la norme est égale au carré du module des deux composantes (X(k), Y(k)) de la donnée discrète.

Selon encore une caractéristique supplémentaire de l'invention, la norme est égale au maximum des deux composantes (X(k), Y(k)) de la donnée discrète.

Selon encore une caractéristique supplémentaire de l'invention, le récepteur comprend une boucle d'asservissement qui transmet l'information de phase

(Vφ) comme signal de commande d'un circuit d'horloge du récepteur.

Selon encore une caractéristique supplémentaire de l'invention, le circuit d'horloge du récepteur délivre les deux fonctions orthogonales périodiques (a, b) de fréquence fp.

L'invention concerne également un système de transmission ultra large bande comprenant un émetteur qui émet des séquences d'impulsions, un récepteur et un canal de transmission entre l'émetteur et le récepteur. Le récepteur est un récepteur selon l'invention tel que mentionné ci-dessus.

Selon une caractéristique supplémentaire de l'invention, la période moyenne des impulsions émises est égale à K1/fp, où K1 est un nombre réel.

Selon encore une caractéristique supplémentaire de l'invention, K1 est un nombre entier supérieur ou égal à 1.

Selon encore une caractéristique supplémentaire de l'invention, la base de temps pour la modulation de position des impulsions émises est sensiblement égale à K2/fp, où K2 est un nombre réel.

Selon encore une caractéristique supplémentaire de l'invention, K2 est un nombre entier supérieur ou égal à 1.

L'invention concerne également un procédé de réception de signal ultra large bande (R(t)) constitué d'une succession d'impulsions, le procédé permettant de délivrer des informations d'amplitude (Va) et/ou de phase (Vφ) relatives aux impulsions reçues, par corrélation du signal reçu (R(t)) avec un signal de référence (ref(k)). Le procédé de réception comprend :

- une étape de projection du signal reçu (R(t)) sur deux fonctions orthogonales périodiques (a, b) de fréquence fp sensiblement égale à la fréquence centrale fc du signal reçu, pour délivrer deux signaux orthogonaux,
- une étape d'échantillonnage des deux signaux orthogonaux pour délivrer un flux de données discrètes (d(k)), chaque donnée discrète ayant deux composantes (X(k), Y(k)),
- une étape d'estimation pour calculer le signal de référence (ref(k)) à partir du flux de données discrètes (d(k)), et
- une étape de comparaison qui délivre les informations d'amplitude (Va) et/ou de phase (Vφ) relatives aux impulsions reçues par comparaison de tout ou partie des données contenues dans le flux de données discrètes (d(k)) avec tout ou partie d'un ensemble de données (Xr(0), Xr(1), ..., Xr(n), Yr(0), Yr(1), ..., Yr(n)) constituant le signal de référence (ref(k)).

Selon une caractéristique supplémentaire de l'invention, le procédé de réception comprend une étape de décodage et d'intégration cohérente pour réduire le bruit des données discrètes (d(k)) issues de l'étape d'échantillonnage.

Selon encore une caractéristique supplémentaire de l'invention, le procédé de réception comprend une étape de filtrage passe-bas des deux signaux orthogonaux, la largeur de bande du filtrage étant sensiblement égale à la largeur de bande du signal ultra large bande (R(t)).

Selon encore une caractéristique supplémentaire de l'invention, l'échantillonnage est effectué à une fréquence d'échantillonnage sensiblement égale à fp/K3, ou K3 est un nombre rationnel.

Selon encore une caractéristique supplémentaire de l'invention, l'échantillonnage est apériodique.

Selon encore une caractéristique supplémentaire de l'invention, lors de l'étape d'estimation, le signal de référence est calculé sous la forme d'une moyenne cohérente sur des trames physiques du signal ultra large bande (R(t)).

Selon encore une caractéristique supplémentaire de l'invention, le procédé de réception comprend un filtrage coupe-bande du signal ultra large bande centré sur la fréquence fc du signal reçu.

Selon encore une caractéristique supplémentaire de l'invention, la fréquence centrale du filtrage coupe-bande est commandée par un circuit de contrôle qui commande la fréquence des deux fonctions orthogonales périodiques.

Selon encore une caractéristique supplémentaire de l'invention, le procédé de réception comprend le calcul d'une norme d'au moins une donnée discrète (d(k)) à deux dimensions (X(k), Y(k)) et une étape de décision pour décider si, oui ou non, un traitement du signal reçu associé à la donnée discrète doit être effectué ou non.

Selon encore une caractéristique supplémentaire de l'invention, le procédé comprend une étape d'asservissement d'un circuit d'horloge du récepteur à l'aide de l'information de phase (Vφ).

L'invention concerne également un procédé de transmission de signal ultra large bande comprenant un procédé d'émission de séquences d'impulsions et un procédé de réception des impulsions émises, caractérisé en ce que le procédé de réception des impulsions émises est un procédé selon l'invention tel que mentionné ci-dessus.

Selon une caractéristique supplémentaire du procédé de transmission selon l'invention, la période moyenne des impulsions émises est égale à K1/fp, où K1 est un nombre réel.

Selon encore une caractéristique supplémentaire du procédé de transmission selon l'invention, K1 est un nombre entier supérieur ou égal à 1.

Selon encore une caractéristique supplémentaire du procédé de transmission selon l'invention, la base de temps pour la modulation de position des impulsions émises est sensiblement égale à K2/fp, où K2 est un nombre réel positif.

Selon encore une caractéristique supplémentaire du procédé selon l'invention, K2 est un nombre entier supérieur ou égal à 1.

Le procédé de réception de signal ultra large bande selon l'invention s'affranchit avantageusement de la nécessité de scanner le canal avec une grande précision.

L'estimation du canal et le traitement des impulsions reçues se fait avantageusement dans un même flux de données, au niveau de l'interface radiofréquence de réception. L'invention propose un traitement qui permet d'obtenir directement une information continue de position et/ou d'amplitude et/ou de phase sur chacun des multi-trajets.

Le dispositif selon l'invention transpose le signal reçu en une succession d'échantillons complexes. C'est à partir des échantillons complexes obtenus que sont analysées les informations sur le canal, les impulsions reçues, et la synchronisation.

Dans un premier temps, c'est l'acquisition du canal qui est effectuée. La phase d'acquisition du canal requiert l'émission d'une séquence d'impulsions connues a priori du récepteur. L'acquisition consiste, d'une part, à obtenir une estimation grossière de l'instant d'arrivée d'une impulsion reçue (synchronisation en phase sur la séquence d'impulsions mentionnée ci-dessus) et, d'autre part, à construire un signal de référence qui est l'image dé-bruitée de la réponse impulsionnelle du canal de propagation. La phase et/ou l'amplitude estimées du signal courant permettent d'assurer la synchronisation émetteur/récepteur (contrôle de la fréquence d'horloge et/ou contrôle du gain). Le signal de référence est actualisé à partir des échantillons complexes, afin de tenir compte de l'évolution du canal de propagation.

Une manière simple pour la construction du signal de référence est de pratiquer une intégration cohérente des données reçues, trame par trame, sur plusieurs périodes PRP. Il existe également d'autres méthodes pour réaliser la construction du signal de référence, telles que, par exemple, les méthodes connues en théorie de l'estimation. A titre d'exemple non limitatif, une estimation alternative est l'usage d'un processus itératif régressif (algorithme d'estimation avancé).

Dans un deuxième temps, une comparaison du signal reçu courant avec le signal de référence permet d'extraire les informations de position et/ou d'amplitude et/ou de phase du signal courant. Selon une caractéristique particulièrement avantageuse de l'invention, les informations de position et/ou de phase du signal courant reçu permettent de détecter des erreurs de synchronisation de fréquence, comme cela sera exposé plus en détail ultérieurement.

Par rapport à l'art antérieur connu, certains des avantages essentiels du récepteur selon l'invention peuvent être énumérés comme suit :

- une amélioration très sensible du rapport signal sur bruit (RSB) ;
- un seul flux de données sert à la fois pour obtenir la position des échantillons et pour acquérir les multi-trajets ;
- une cadence d'échantillonnage réduite adaptée à la bande passante utile permet soit d'économiser en consommation, soit, à consommation égale, de travailler plus vite ou dans une bande passante plus large.

Brève description des figures

D'autres caractéristiques et avantages de l'invention apparaîtront à la lecture d'un mode de réalisation préférentiel fait en référence aux figures jointes parmi lesquelles :

- la figure 1 représente un schéma de principe de système de transmission ultra large bande ;
- la figure 2 représente des signaux émis et reçus dans un système de transmission ultra large bande ;
- la figure 3 représente un récepteur de système de transmission ultra large bande selon le mode de réalisation préférentiel de l'invention ;
- la figure 4 représente un perfectionnement du récepteur représenté en figure 3 ;
- la figure 5 représente un schéma fonctionnel d'un premier circuit représenté sur les figures 3 et 4 ;
- les figures 6a-6d représentent des signaux mis en oeuvre dans le circuit représenté en figure 5 ;
- la figure 7 représente un schéma fonctionnel d'un deuxième circuit représenté sur les figures 3 et 4 ;
- la figure 8 représente un schéma fonctionnel d'un circuit représenté en figure 7 ;
- les figures 9 et 10 représentent, respectivement, un premier et un deuxième perfectionnements du récepteur représenté en figure 4.

Description détaillée de modes de mise en oeuvre de l'invention

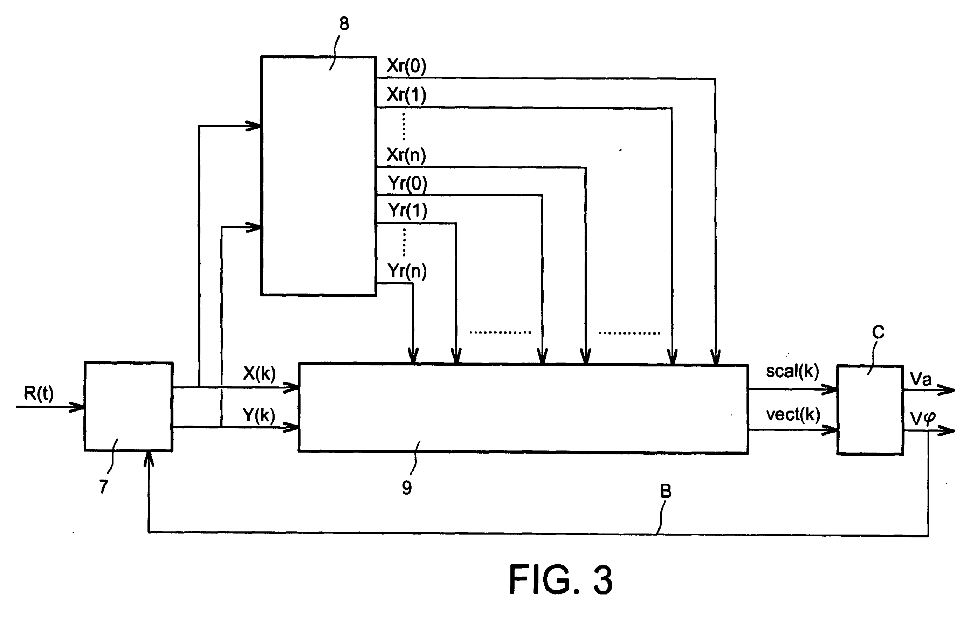

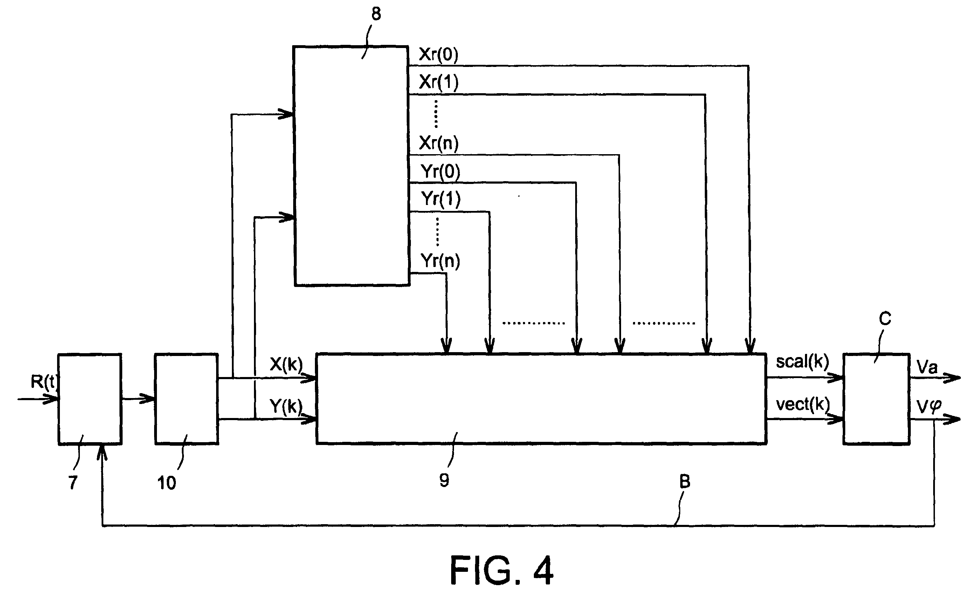

La figure 3 représente un récepteur de système de transmission ultra large bande selon l'invention et la figure 4 représente un perfectionnement du récepteur représenté en figure 3.

Le récepteur selon l'invention comprend un circuit 7 de discrétisation temporelle qui délivre des échantillons du signal reçu, un circuit 8 d'estimation de réponse impulsionnelle qui délivre un signal de référence à partir des échantillons délivrés par le circuit 7, un circuit 9 de comparaison entre les échantillons délivrés par le circuit 7 et le signal de référence délivré par le circuit 8, et un circuit C qui calcule, à partir du signal délivré par le circuit de comparaison 9, des informations de position, d'amplitude et de phase relative au signal reçu.

Selon le perfectionnement représenté en figure 4, le récepteur comprend un circuit 10 de décodage et d'intégration cohérente qui a pour fonction de réduire le bruit des échantillons délivrés par le circuit 7. Sur la figure 4, le circuit 10 est placé en amont du circuit 9. Selon des modes de réalisation alternatifs de l'invention, le circuit 10 peut être placé en sortie du circuit 9 ou en sortie du circuit C.

Le circuit 7 de discrétisation du signal reçu a pour fonction de projeter le signal reçu sur une famille de 2 fonctions orthogonales de fréquence fp, puis d'échantillonner le signal ainsi projeté. Le signal délivré en sortie du circuit 7 est un flux de données d(k) de valeurs discrètes à 2 dimensions X(k), Y(k), le paramètre k représentant le rang d'un échantillon (k=0, 1, ..., n). Le flux des données d(k) correspond à la succession des trames physiques reçues, lesquelles trames physiques peuvent se recouvrir.

Le circuit 8 d'estimation de réponse impulsionnelle a pour fonction de construire un signal de référence ref(k) à partir du flux discret d(k). Une manière de procéder à cette estimation est, par exemple, de faire une moyenne cohérente sur les trames physiques du signal reçu.

Le circuit 9 de comparaison a pour fonction de comparer l'image discrète du signal courant reçu d(k) avec le signal de référence ref(k) pour en extraire des informations de position temporelle et/ou d'amplitude et/ou de phase qui correspondent aux impulsions reçues. Une manière d'effectuer cette comparaison est d'utiliser des bancs de filtres à réponse impulsionnelle finie (RIF) dont les coefficients sont issus du signal de référence ref(k). Une recombinaison des signaux délivrés par les filtres à réponse impulsionnelle finie permet alors d'obtenir des grandeurs scal(k) et vect(k) telles que :

$$scal(k)=d(k)*ref(k),$$

et

vect (k) =d (k)^ref (k), où le symbole « * » représente l'opération de produit scalaire (mesure de la corrélation) et le symbole « Λ » représente l'opération de produit vectoriel (mesure de l'orthogonalité).

Le circuit C calcule, à partir des grandeurs scal (k) et vect (k), des tensions Va et Vφ représentatives, respectivement, de l'amplitude et de la phase du signal reçu R(t). L'information d'amplitude est utilisée pour déterminer la position du signal reçu. La position est ainsi donnée, par exemple, par le maximum des amplitudes ou par la détection d'un dépassement de seuil donné sur les tensions Va. Avantageusement, il est possible de corriger tout glissement de l'horloge du récepteur par rapport à l'horloge de l'émetteur. La tension Vφ représentative de la phase du signal reçu est alors utilisée comme signal de commande de l'horloge du récepteur qui est présente, par exemple, dans le circuit 7.

Selon une alternative de l'invention, le circuit de comparaison 9 et le circuit C peuvent être remplacés par un circuit de traitement en coordonnées polaires des échantillons X(k) et Y(k), communément appelé circuit CORDIC (Cordic pour "COordinate Rotation DIgital Computer"), lequel circuit de traitement en coordonnées polaires délivre les mêmes informations d'amplitude et de phase Va, Vφ que celles mentionnées précédemment.

Les impulsions émises ont une très faible largeur, ce qui implique une exigence de grande précision temporelle sur l'ensemble des paramètres d'émission et de réception et, en particulier, la période moyenne d'émission PRP, l'écart de modulation de position des impulsions émises ΔT(PPM), la période d'échantillonnage T et la fréquence fp des fonctions orthogonales a et b.

Le procédé selon l'invention établit et maintient une synchronisation robuste de l'ensemble de ces paramètres. Cette synchronisation est assurée par le maintien de rapports connus et fixés K1, K2, K3 tels que :

$$PRP = K1 / fp ;$$

$$\Delta T(PPM) = K2 / fp ;$$

$$T = K3 / fp,$$

où K1 et K2 sont des nombres réels positifs et K3 est un nombre rationnel.

Le maintien de ces rapports constants est assuré par la tension Vφ qui, via la boucle d'asservissement B, donne une information régulière sur un glissement de phase éventuel.

Il faut remarquer que, si le coefficient K1 n'est pas entier, à chaque période PRP correspond une phase différente sur chacun des échantillons complexes, phase qu'il faut alors calculer en bande de base, en fonction de la connaissance de K1, et dont il faut tenir compte pour le filtrage effectué par le circuit 9 de comparaison.

Selon un mode avantageux de l'invention, le coefficient K1 est un nombre entier supérieur ou égal à 1. Dans ce cas, à une position nominale donnée au sein d'une période PRP (i.e. pour une position relative constante par rapport au début de la période PRP) et à une phase donnée sur l'impulsion émise prenant un nombre limité de valeurs discrètes qui ne dépendent que de la modulation sur la phase, correspond une phase donnée sur l'impulsion reçue. Dans ce cas, en absence de glissement des horloges émetteur/récepteur et pour une position nominale donnée au sein d'une période PRP, il n'y a pas de correction à apporter sur la phase d'une impulsion reçue d'une période PRP à l'autre.

Une erreur de phase entre la phase nominale de l'impulsion reçue qui prend un nombre fini de valeurs discrètes connues ne dépendant que de la modulation et la phase effective de l'impulsion reçue qui peut avoir glissé de manière continue entre deux phases nominales connues est interprétée directement (i.e. sans correction supplémentaire sur la phase) comme une erreur sur la synchronisation globale sur la période PRP, d'une part, et sur les horloges des deux fonctions périodiques orthogonales de fréquence fc, d'autre part.

Dans un mode de réalisation avantageux, les coefficients K1 et K2 sont tous deux entiers. Dans ce cas, à n'importe quelle position nominale, à une phase donnée sur l'impulsion émise prenant un nombre limité de valeurs discrètes qui ne dépendent que de la modulation sur la phase, correspond une phase donnée sur l'impulsion reçue. En l'absence de glissement des horloges émetteur/récepteur, il n'y a alors aucune correction à apporter sur la phase d'une impulsion reçue. Dans ce mode de réalisation avantageux, phase et position sont décorrélées. La phase est lue sans se préoccuper de la position.

Pour toute position nominale, une erreur de phase entre la phase nominale et la phase effective de l'impulsion reçue qui peut avoir glissé de manière continue entre deux phases nominales connues est donc interprétée directement (i.e. sans correction supplémentaire sur la phase) comme une erreur sur la synchronisation globale sur la période PRP et sur les positions nominale, d'une part, et sur les horloges des deux fonctions orthogonales de fréquence fp, d'autre part.

Le coefficient K3 est un nombre rationnel. Cela permet d'effectuer un traitement cohérent dans la partie discrète du récepteur.

Selon l'invention, la synchronisation de l'ensemble de la communication est donc établie et maintenue grâce à un asservissement d'une horloge de base à l'information de glissement de phase Vφ issue du circuit C.

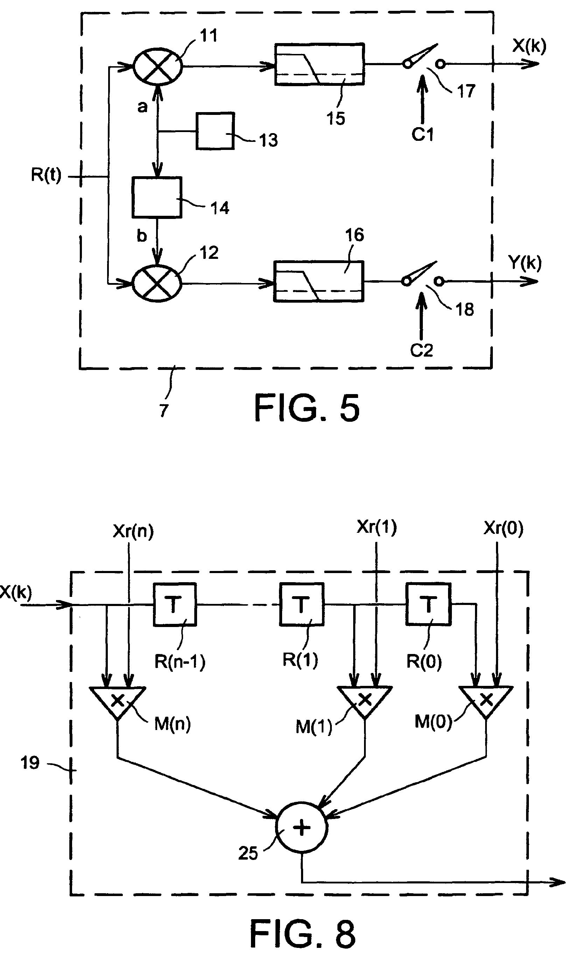

La figure 5 représente un circuit 7 de discrétisation temporelle du signal reçu R(t). Le circuit 7 comprend deux mélangeurs 11, 12, un générateur de fonctions périodiques 13, un déphaseur 14, deux filtres passe-bas 15, 16 et deux échantillonneurs 17, 18. Le générateur de fonctions périodiques 13 et le déphaseur 14 peuvent être remplacés par un seul et même circuit qui génère directement un doublet de fonctions périodiques orthogonales. Selon un mode de réalisation particulier de l'invention, le générateur de fonctions périodiques 13 ou le circuit unique qui génère directement un doublet de fonctions périodiques orthogonales sont utilisés comme oscillateur local de l'horloge de base de réception.

Le signal reçu R(t) est constitué d'une succession d'impulsions. Sa bande passante B est très large, par exemple 7GHz, et sa fréquence centrale fc est élevée, par exemple 7 GHz. Le mélangeur 11 reçoit, sur une première entrée, le signal R(t) et, sur une deuxième entrée, un signal périodique a délivré par le générateur 13. De même, le mélangeur 12 reçoit, sur une première entrée, le signal R(t) et, sur une deuxième entrée, un signal périodique b identique au signal a et déphasé par rapport au signal a, par exemple retardé d'une durée égale à 1/4fc, de manière à maintenir l'orthogonalité entre les deux signaux a et b. Dans le cas de signaux a et b sinusoïdaux, le déphasage angulaire est donc égal à π/2.

Les signaux délivrés par les mélangeurs 11 et 12 sont transmis aux filtres passe-bas respectifs 15 et 16. La fréquence de coupure des filtres 15 et 16 est sensiblement égale à la moitié de la bande passante B du signal R(t). Les signaux issus des filtres 15 et 16 sont ensuite échantillonnés par les échantillonneurs respectifs 17 et 18 sous l'action des commandes C1 et C2. Le signal délivré en sortie du circuit 7 est un flux de données d(k) de valeurs discrètes à deux dimensions X (k), Y(k) (k=0, 1, ..., n). Le flux des données d(k) correspond à la succession des trames physiques reçues, lesquelles trames physiques peuvent se recouvrir. Selon un mode de réalisation alternatif du circuit 7, l'échantillonnage est effectué avant le mélange.

L'échantillonnage des signaux peut être périodique, de période T. Avantageusement, la fréquence d'échantillonnage est adaptée à la bande de travail suivant le critère de Nyquist, ce qui permet une réduction importante des temps de calcul. L'échantillonnage peut également être semi-périodique (le délai entre deux échantillons successifs est alors un multiple de T) ou apériodique (les instants d'échantillonnage répondent alors à une consigne non périodique sur une échelle de temps continue).

Avantageusement, la réponse impulsionnelle des filtres passe-bas 15 et 16 qui intègrent le signal analogique dans la bande fréquentielle utile avant échantillonnage peut être adaptée à la forme de l'impulsion reçue. Les filtres 15 et 16 peuvent également être des filtres de type égaliseur sur l'enveloppe du spectre qui permettent de minimiser l'étalement de la réponse impulsionnelle du canal.

Afin, d'une part, d'approcher une transformation bijective permettant de lever au mieux toute ambiguïté sur l'information détectée (à une position d'impulsion reçue correspond un point complexe (X(k) ; Y(k)) et un seul) et, d'autre part, d'améliorer le rapport signal sur bruit, la largeur de la fenêtre de lecture ainsi que la forme du doublet des fonctions a et b sont choisies de manière appropriée.

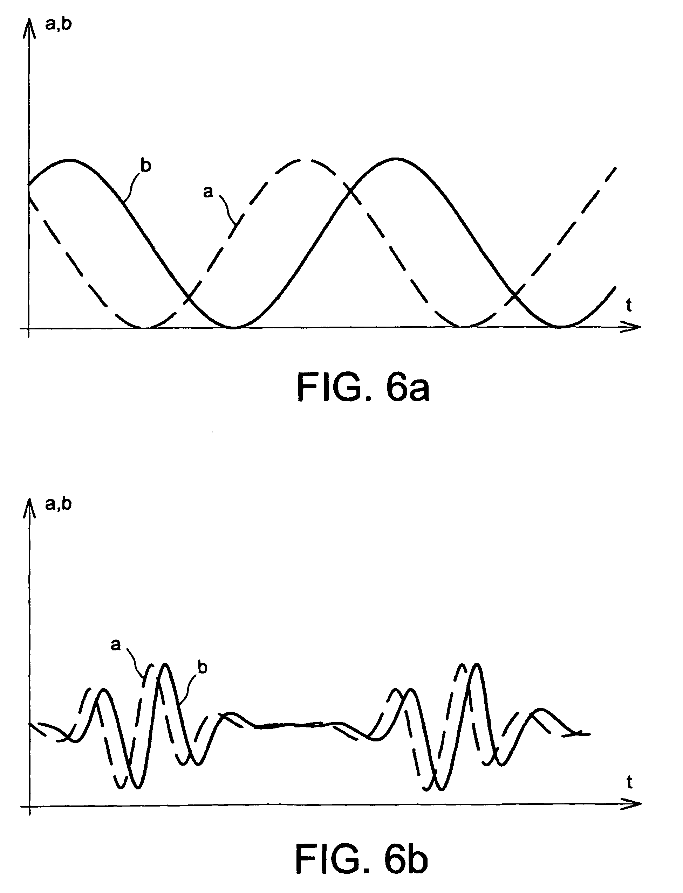

Ainsi, pour ce qui concerne l'amélioration du rapport signal sur bruit, il est avantageux d'utiliser un doublet de fonctions a et b dont la forme est adaptée à celle des impulsions reçues. Cette adaptation est d'autant mieux réalisée que les spectres du signal reçu R(t) et des signaux a et b du doublet après filtrage passe-bas coïncident le mieux possible. Par exemple, un cosinus et un sinus dont les fréquences sont égales à fc, fréquence centrale du signal reçu R(t), réalisent cette adaptation (cf. figure 6a). D'autres exemples de signaux a et b sont également possibles, à savoir :

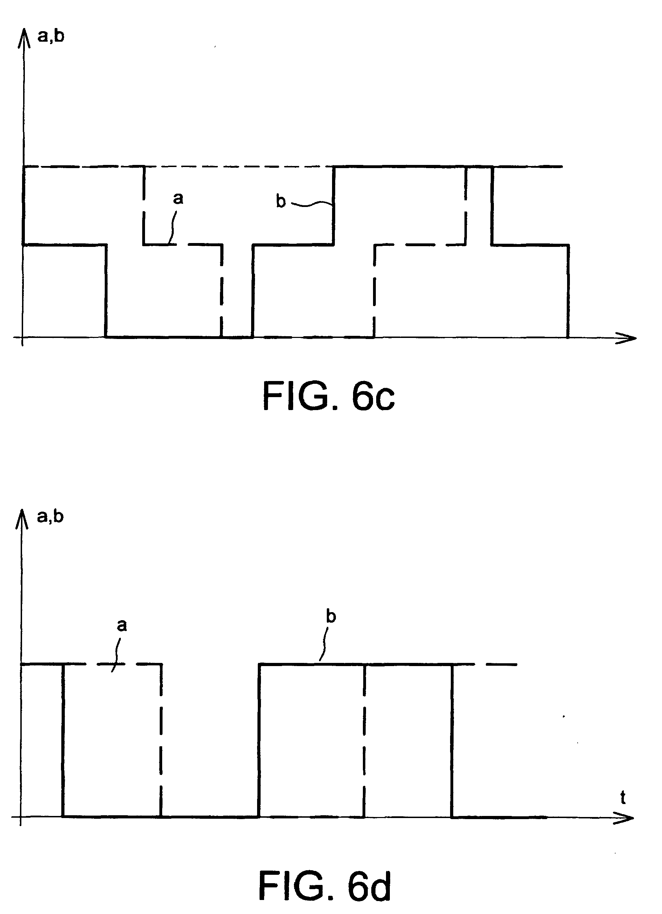

- un signal de fréquence fc ayant une forme proche des impulsions reçues et le signal en quadrature associé (cf. figure 6b),
- un signal carré de fréquence fc et le signal en quadrature associé (cf. figures 6c, 6d).

De façon générale, la fréquence d'échantillonnage du circuit 7 au niveau des échantillonneurs 17 et 18 est supérieure ou égale à la fréquence respectant le critère Nyquist. Concrètement, la fréquence de Nyquist est ici égale à deux fois la fréquence de coupure des filtres passe-bas 15 et 16 placés en amont de l'échantillonnage.

Toutefois, selon un mode de réalisation particulier de l'invention, la fréquence d'échantillonnage du circuit 7 au niveau des échantillonneurs 17 et 18 peut être choisie inférieure à la fréquence respectant le critère Nyquist. Elle peut ainsi être égale, par exemple, à la moitié de la fréquence Nyquist. Dans ce cas, la fenêtre d'échantillonnage a pour durée la largeur d'une impulsion. Il s'en suit une légère dégradation des performances, mais au bénéfice d'un relâchement des contraintes sur la complexité des calculs puisque la fréquence de travail aval est inférieure.

Une mise en oeuvre possible du circuit 7 de discrétisation est un récepteur I/Q (I/Q pour « In phase/Quadrature »). Un autre type de mise en oeuvre peut être, par exemple, une implémentation numérique du mélange (multiplication du signal reçu par un doublet de fonctions orthogonales) ou l'utilisation d'un circuit combinant les fonctions de mélange et d'échantillonnage sur le même front.

Les informations délivrées par le circuit 7 de discrétisation du signal sont transmises, d'une part, au circuit 8 d'estimation de réponse impulsionnelle et, d'autre part, au circuit 9 de comparaison.

Le circuit 8 calcule un signal de référence à partir des échantillons issus du circuit 7. Un échantillon de référence $Xr(k)$, $Yr(k)$ est alors calculé pour chaque échantillon $X(k)$, $Y(k)$. Une manière de calculer le signal de référence est, par exemple, de calculer une moyenne des échantillons des trames physiques successives.

Le circuit de comparaison 9 compare le signal reçu discrétisé $d(k)$ avec le signal de référence $ref(k)$, afin d'extraire du signal $d(k)$ une information de position et d'amplitude sur les symboles émis. Cette comparaison peut être une corrélation, trame par trame ou échantillon par échantillon, sur les deux composantes de chaque donnée $d(k)$.

La mise en oeuvre du circuit 9 peut être analogique ou numérique. Dans un mode de réalisation préféré, la mise en oeuvre est numérique (SCAL/VECT ou CORDIC) et des convertisseurs analogiques/numériques sont alors placés entre le circuit 7 de discrétisation ou le circuit 10 de décodage et d'intégration et les circuits 8 d'estimation de réponse impulsionnelle et 9 de comparaison.

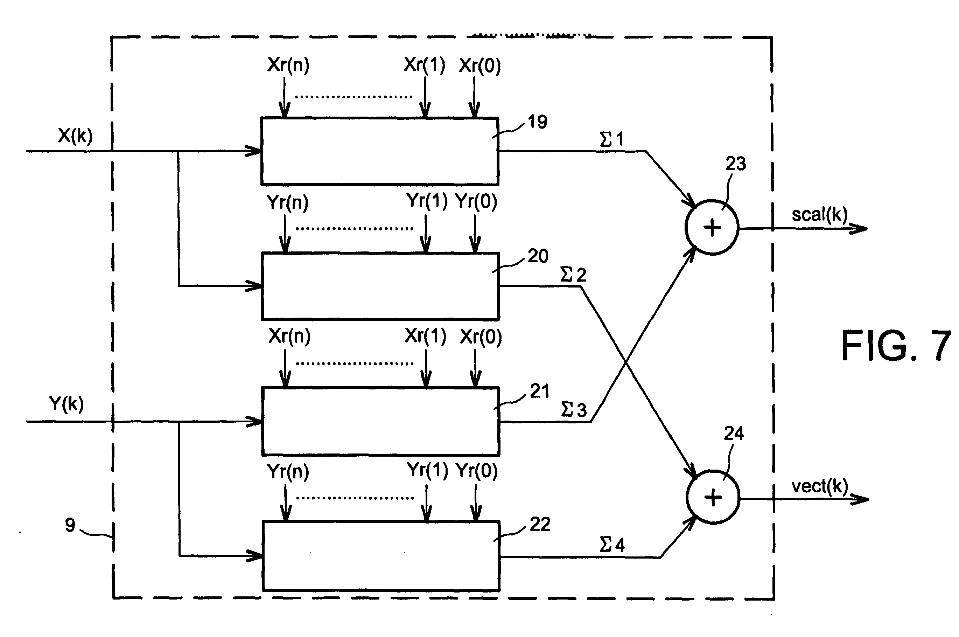

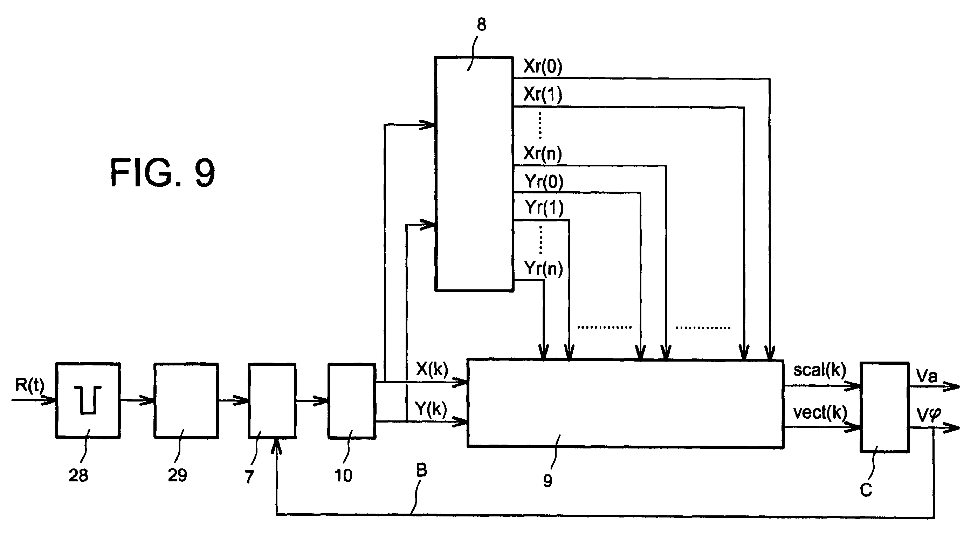

La figure 7 représente un circuit de comparaison selon l'invention et la figure 8 représente une vue de détail du circuit représenté en figure 7.

Le circuit de comparaison 9 comprend deux bancs de filtres 19 et 20 pour la composante $X(k)$ et deux bancs de filtres 21 et 22 pour la composante $Y(k)$. Chaque banc de filtres comprend n circuits de retard $R(0)$, $R(1)$, ..., $R(n-1)$, n+1 multiplicateurs $M(0)$, $M(1)$, ..., $M(n)$ et un additionneur 25 (cf. figure 8). Les coefficients des filtres à réponse impulsionnelle des bancs de filtres 19 et 21 sont formés des données de référence $Xr(0)$, $Xr(1)$, ..., $Xr(n)$ et les coefficients des filtres à réponse impulsionnelle des bancs de filtres 20 et 22 sont formés des données de référence $Yr(0)$, $Yr(1)$, ..., et $Yr(n)$. Les sorties des bancs de filtres 19 et 21 sont reliées aux entrées d'un additionneur 23 et les sorties des bancs de filtres 20 et 22 sont reliées aux entrées d'un additionneur 24. Les sorties des additionneurs 23 et 24 constituent les sorties du circuit de comparaison. La durée de chaque retard est égale à la période d'échantillonnage T. Les données obtenues en sortie des bancs de filtres 19, 20, 21 et 22 s'écrivent alors respectivement :

$$\Sigma_1 = \sum_{i=0}^{n} Xr(i) \times X(i+k),$$

$$\Sigma_2 = \sum_{i=0}^{n} Xr(i) \times Y(i+k),$$

$$\Sigma_3 = \sum_{i=0}^{n} Yr(i) \times X(i+k),$$

$$\Sigma_4 = \sum_{i=0}^{n} Yr(i) \times Y(i+k),$$

où le symbole « x » représente l'opération de multiplication.

De même, les signaux délivrés par le circuit de comparaison 9 sont alors :

$$scal(k) = \Sigma_1 + \Sigma_3,$$

et

$$vect(k) = \Sigma_2 - \Sigma_4$$

Les signaux $scal(k)$ et $vect(k)$ sont directement exploitables pour le calcul de l'amplitude et de la phase des signaux reçus.

Si le circuit de comparaison est utilisé en pleine capacité de calcul, chaque banc de filtre effectue 2n multiplications par période T. Il est cependant possible d'économiser sur la quantité de calculs, par exemple en n'activant qu'une fraction des quatre corrélations, ou en n'activant qu'une partie des coefficients de filtre (par exemple ceux que l'on estime suffisamment significatifs), ou encore en effectuant une corrélation sur seulement une fraction des positions.

Une autre manière de mettre en oeuvre la comparaison est d'utiliser un circuit spécifique qui transforme les coordonnées cartésiennes du signal complexe en coordonnées polaires et effectue les comparaisons sur les phases et les amplitudes.

La figure 9 représente un premier perfectionnement du dispositif de réception selon l'invention.

Le dispositif de la figure 9 comprend, outre les éléments décrits précédemment, des moyens pour augmenter sa robustesse vis-à-vis du bruit ambiant et, plus particulièrement, vis-à-vis de signaux perturbateurs dont les fréquences sont comprises dans la bande passante B du signal utile reçu.

Des signaux perturbateurs dont les fréquences sont comprises dans la bande passante B du signal reçu peuvent être captés par le circuit de réception. Si ces signaux perturbateurs ont des fréquences sensiblement identiques aux fréquences des signaux périodiques utilisés pour la projection, ils sont amplifiés lors du mélange avec les signaux périodiques (mélangeurs 11 et 12 de la figure 5). Il en résulte une limitation importante du Rapport Signal sur Bruit et Interférences (RSBI).

Les signaux perturbateurs doivent pouvoir être éliminés. Le dispositif selon le perfectionnement de l'invention permet d'effectuer simplement une élimination de ces signaux. L'élimination des signaux perturbateurs est effectuée par un filtre coupe-bande 28 placé en amont du front radiofréquence de réception 29, lui-même placé en amont du circuit 7 de discrétisation du signal (cf. figure 9). De façon tout-à-fait originale, il est alors possible d'éliminer un signal à la fréquence centrale fc du signal reçu, tout en maintenant d'excellentes performances globales de détection.

Selon un mode de réalisation avantageux de l'invention, la fréquence centrale du filtre coupe bande 28 peut être commandée par le même circuit de contrôle que celui qui commande la fréquence des signaux de projection (signaux a et b dans le cas où N=2). Il est également possible d'utiliser plusieurs filtres coupe bande fonctionnant à des fréquences différentes pour supprimer des signaux perturbateurs centrés sur ces différentes fréquences.

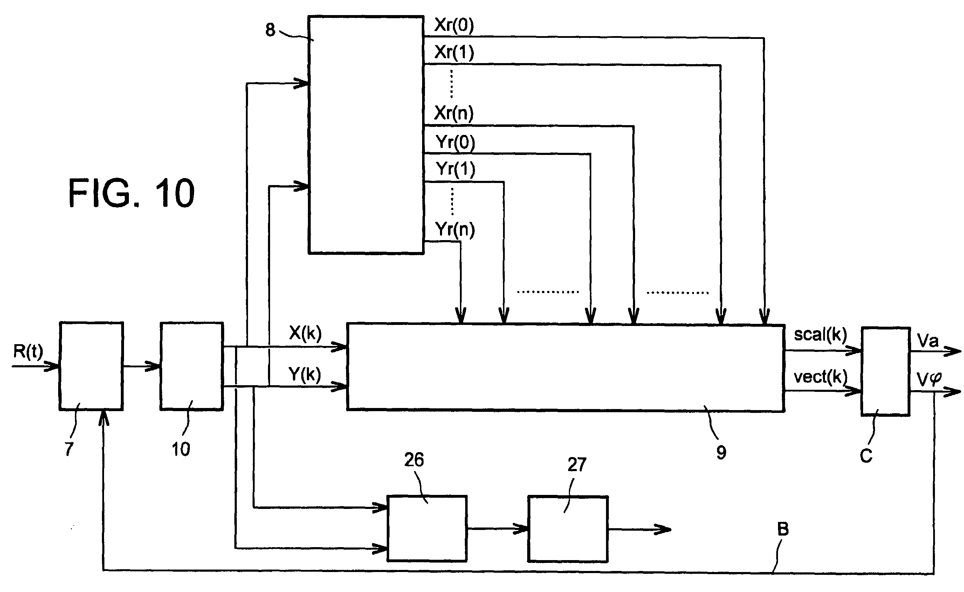

La figure 10 représente un autre perfectionnement du dispositif de réception selon l'invention.

Outre les circuits 7, 8, 9, 10 précédemment décrits, le dispositif de réception comprend un circuit de détection de signal 26 et un étage de décision 27 en série avec le circuit de détection 26. Les circuits 26 et 27 sont utilisés lors de la phase d'initialisation de la communication entre une source émettrice et le récepteur. Il s'agit alors de déterminer si, oui ou non, un signal utile est détecté par le récepteur.

A cette fin, le circuit 26 calcule une norme à partir des grandeurs $X(k)$ et $Y(k)$ qu'il reçoit sur ses entrées. La norme est, par exemple, la quantité $X(k)^2+Y(k)^2$ calculée sur au moins un échantillon ou la quantité $\max[X(k), Y(k)]$ calculée sur chaque échantillon. Selon la valeur de la norme, il est décidé si le signal détecté doit être considéré comme un signal utile ou non et, partant, si un traitement des signaux reçus doit être mis en oeuvre ou non. C'est un avantage du dispositif selon l'invention que de permettre la mise en oeuvre de la phase d'initialisation de la transmission à l'aide d'un simple circuit de calcul de norme.

Il faut cependant noter que les circuits 8 et 9 mentionnés précédemment peuvent également calculer la norme $X(k)^2+Y(k)^2$. Dans le cas où les circuits 8 et 9 sont choisis pour faire ce calcul, un partage des ressources de calcul entre détection du signal utile et calcul de la norme est alors mis en oeuvre. Le calcul de la norme sera cependant préférentiellement effectué par un circuit 26 indépendant, car un tel circuit permet d'effectuer le calcul de façon simple et rapide.

## Revendications

**1.** Récepteur de signal ultra large bande (R(t)) constitué d'une succession d'impulsions, le récepteur comprenant des moyens (7, 8, 9, C) pour délivrer des informations d'amplitude (Va) et/ou de phase (Vφ) relatives aux impulsions reçues, par corrélation du signal reçu (R(t)) avec un signal de référence (ref(k)), **caractérisé en ce que** lesdits moyens (7, 8, 9, C) comprennent :

- des moyens (11, 12, 13, 14) pour délivrer deux signaux orthogonaux par projection du signal reçu (R(t)) sur deux fonctions orthogonales périodiques (a, b) de fréquence fp sensiblement égale à la fréquence centrale fc du signal reçu,
- des moyens d'échantillonnage (17, 18) des deux signaux orthogonaux pour délivrer un flux de données discrètes (d(k)), chaque donnée discrète ayant deux composantes (X(k), Y(k)) ,
- des moyens d'estimation (8) pour calculer le signal de référence (ref(k)) à partir du flux de données discrètes (d(k)), et
- des moyens de comparaison (9, C) qui délivrent les informations d'amplitude (Va) et/ou de phase (Vφ) relatives aux impulsions reçues par comparaison de tout ou partie des données contenues dans le flux de données discrètes (d(k)) avec tout ou partie d'un ensemble de données (Xr(0), Xr(1), ..., Xr(n), Yr(0), Yr(1), ..., Yr(n)) constituant le signal de référence (ref(k)).

**2.** Récepteur selon la revendication 1, **caractérisé en ce qu'**il comprend un circuit de décodage et d'intégration cohérente (10) pour réduire le bruit des données discrètes (d(k)) délivrées par les moyens d'échantillonnage (17, 18).

**3.** Récepteur selon la revendication 1 ou 2, **caractérisé en ce que** les moyens de comparaison (9) comprennent des bancs de filtres à réponse impulsionnelle finie (19, 20, 21, 22) dont les coefficients sont des données qui constituent le signal de référence (ref(k)).

4. Récepteur selon l'une quelconque des revendications précédentes, **caractérisé en ce qu'**il comprend des filtres passe-bas (15, 16) placés entre les moyens (11, 12) pour délivrer les deux signaux orthogonaux et les moyens d'échantillonnage (17, 18) et dont la fréquence de coupure est sensiblement égale à la moitié de la largeur de bande du signal reçu (R(t)).

5. Récepteur selon la revendication 4, **caractérisé en ce que** les filtres passe-bas (15, 16) sont des filtres égaliseurs.

6. Récepteur selon l'une quelconque des revendications précédentes, **caractérisé en ce que** la fréquence d'échantillonnage des moyens d'échantillonnage (17, 18) est sensiblement égale à fp/K3, où K3 est un nombre rationnel.

7. Récepteur selon l'une quelconque des revendications 1 à 5, **caractérisé en ce que** les moyens d'échantillonnage (17, 18) sont commandés par une commande apériodique.

8. Récepteur selon l'une quelconque des revendications précédentes, **caractérisé en ce que** les moyens d'estimation (8) pour calculer le signal de référence (ref(k)) calculent une moyenne cohérente sur des trames physiques du signal reçu.

9. Récepteur selon l'une quelconque des revendications précédentes, **caractérisé en ce qu'**il comprend au moins un filtre coupe-bande (28) placé en amont des moyens (11, 12) pour délivrer les deux signaux orthogonaux et dont la fréquence centrale est dans la bande passante (B) du signal reçu (R(t)).

10. Récepteur selon la revendication 9, **caractérisé en ce qu'**au moins un filtre coupe-bande (28) est centré sur la fréquence centrale fc du signal reçu.

11. Récepteur selon l'une quelconque des revendications précédentes, **caractérisé en ce qu'**il comprend un circuit de détection (26) de signal qui calcule une norme d'au moins une donnée discrète (d(k)) et un étage de décision (27), monté en série avec le circuit de détection, pour décider si, oui ou non, un traitement du signal reçu associé à la donnée discrète doit être effectué ou non.

12. Récepteur selon la revendication 11, **caractérisé en ce que** la norme est égale au carré du module des deux composantes (X(k), Y(k)) de la donnée discrète.

13. Récepteur selon la revendication 11, **caractérisé en ce que** la norme est égale au maximum des deux composantes (X(k), Y(k)) de la donnée discrète.

14. Récepteur selon l'une quelconque des revendications précédentes, **caractérisé en ce qu'**il comprend une boucle d'asservissement (B) qui transmet l'information de phase (Vφ) comme signal de commande d'un circuit d'horloge du récepteur.

15. Récepteur selon la revendication 14, **caractérisé en ce que** le circuit d'horloge du récepteur délivre les deux fonctions orthogonales périodiques (a, b) de fréquence fp.

16. Système de transmission ultra large bande comprenant un émetteur qui émet des séquences d'impulsions, un récepteur et un canal de transmission entre l'émetteur et le récepteur, **caractérisé en ce que** le récepteur est un récepteur selon l'une quelconque des revendications 1 à 15.

17. Système de transmission ultra large bande selon la revendication 16, **caractérisé en ce que** la période moyenne des impulsions émises est égale à K1/fp, où K1 est un nombre réel.

18. Système de transmission ultra large bande selon la revendication 17, **caractérisé en ce que** K1 est un nombre entier supérieur ou égal à 1.

19. Système de transmission selon l'une des revendications 16 à 18 , **caractérisé en ce que** la base de temps pour la modulation de position des impulsions émises est sensiblement égale à K2/fp, où K2 est un nombre réel.

20. Système de transmission selon la revendication 19, **caractérisé en ce que** K2 est un nombre entier supérieur ou égal à 1.

21. Procédé de réception de signal ultra large bande (R(t)) constitué d'une succession d'impulsions, le procédé permettant de délivrer des informations d'amplitude (Va) et/ou de phase (Vφ) relatives aux impulsions reçues, par corrélation du signal reçu (R(t)) avec un signal de référence (ref(k)), **caractérisé en ce qu'**il comprend :

   - une étape de projection (11, 12, 13, 14) du signal reçu (R(t)) sur deux fonctions orthogonales périodiques (a, b) de fréquence fp sensiblement égale à la fréquence centrale fc du signal reçu, pour délivrer deux signaux orthogonaux,
   - une étape d'échantillonnage (17, 18) des deux signaux orthogonaux pour délivrer un flux de données discrètes (d(k)), chaque donnée discrète ayant deux composantes (X(k), Y(k)),
   - une étape d'estimation (8) pour calculer le signal de référence (ref (k)) à partir du flux de données discrètes (d (k)), et

- une étape de comparaison (9, C) qui délivre les informations d'amplitude (Va) et/ou de phase (Vφ) relatives aux impulsions reçues par comparaison de tout ou partie des données contenues dans le flux de données discrètes (d(k)) avec tout ou partie d'un ensemble de données (Xr(0), Xr(1), ..., Xr(n), Yr(0), Yr(1), ..., Yr(n)) constituant le signal de référence (ref(k)).

22. Procédé selon la revendication 21, **caractérisé en ce qu'**il comprend une étape de décodage et d'intégration cohérente (10) pour réduire le bruit des données discrètes (X(k)), Y(k)) issues de l'étape d'échantillonnage.

23. Procédé selon l'une quelconque des revendications 21 ou 22, **caractérisé en ce qu'**il comprend une étape de filtrage passe-bas (15, 16) des deux signaux orthogonaux, la largeur de bande du filtrage étant sensiblement égale à la largeur de bande (B) du signal ultra large bande (R(t)).

24. Procédé selon l'une quelconque des revendications 21 à 23, **caractérisé en ce que** l'échantillonnage est effectué à une fréquence d'échantillonnage sensiblement égale à fp/K3, ou K3 est un nombre rationnel.

25. Procédé selon l'une quelconque des revendications 21 à 23, **caractérisé en ce que** l'échantillonnage est apériodique.

26. Procédé selon l'une quelconque des revendications 21 à 25, **caractérisé en ce que**, lors de l'étape d'estimation, le signal de référence est calculé sous la forme d'une moyenne cohérente sur des trames physiques du signal ultra large bande (R(t)).

27. Procédé selon l'une quelconque des revendications 21 à 26, **caractérisé en ce qu'**il comprend un filtrage coupe-bande (28) du signal ultra large bande centré sur la fréquence fc du signal reçu.

28. Procédé selon la revendication 27, **caractérisé en ce que** la fréquence centrale du filtrage coupe-bande est commandée par un circuit de contrôle qui commande la fréquence des deux fonctions orthogonales périodiques.

29. Procédé selon l'une quelconque des revendications 21 à 28, **caractérisé en ce qu'**il comprend le calcul d'une norme d'au moins une donnée discrète à 2 dimensions d'un signal reçu et une étape de décision pour décider si, oui ou non, un traitement du signal reçu associé à la donnée discrète doit être effectué ou non.

30. Procédé selon l'une quelconque des revendications 21 à 29, **caractérisé en ce qu'**il comprend une étape d'asservissement d'un circuit d'horloge du récepteur à l'aide de l'information de phase (V(φ).

31. Procédé de transmission de signal ultra large bande comprenant un procédé d'émission de séquences d'impulsions et un procédé de réception des impulsions émises, **caractérisé en ce que** le procédé de réception des impulsions émises est un procédé selon l'une quelconque des revendications 21 à 30.

32. Procédé de transmission de signal ultra large bande selon la revendication 31, **caractérisé en ce que** la période moyenne des impulsions émises est égale à K1/fp, où K1 est un nombre réel.

33. Procédé de transmission de signal ultra large bande selon la revendication 32, **caractérisé en ce que** K1 est un nombre entier supérieur ou égal à 1.

34. Procédé de transmission de signal ultra large bande selon l'une quelconque des revendications 31 à 33, **caractérisé en ce que** la base de temps pour la modulation de position des impulsions émises est sensiblement égale à K2/fp, où K2 est un nombre réel positif.

35. Procédé de transmission de signal ultra large bande selon la revendication 34, **caractérisé en ce que** K2 est un nombre entier supérieur ou égal à 1.

**Patentansprüche**

1. Empfänger für Ultrabreitbandsignal (R(t)), gebildet durch eine Impulsfolge, wobei der Empfänger Einrichtungen (7, 8, 9, C) umfasst, um die die empfangenen Impulse betreffenden Informationen bezüglich Amplitude (Va) und/oder Phase (Vφ) zu liefern, durch Korrelation des empfangenen Signals (R(t)) mit einem Bezugssignal (ref(k)), **dadurch gekennzeichnet, dass** die genannten Einrichtungen umfassen:

   - Einrichtungen (11, 12, 13, 14) zum Liefern von zwei orthogonalen Signalen durch Projektion des empfangenen Signals (R(t)) auf zwei periodische orthogonale Funktionen (a, b) der Frequenz fp im Wesentlichen gleich der zentralen Frequenz fc des empfangenen Signals,
   - Abtasteinrichtungen (17, 18) der beiden orthogonalen Signale, um einen Fluss diskreter Daten (d(k)) zu liefern, wobei jedes diskrete Datenelement zwei Komponenten (X(k), Y(k)) hat,
   - Ermittlungseinrichtungen (8) zur Berechnung des Bezugssignals (ref(k)) aus dem Fluss diskreter Daten (d(k)), und

- Vergleichseinrichtungen (9, C), welche die die empfangenen Impulse betreffenden Informationen bezüglich Amplitude (Va) und/oder Phase (Vφ) liefern, durch Vergleich aller oder eines Teils der in dem Fluss diskreter Daten (d(k)) enthaltenen Informationen mit allen oder einem Teil einer das Bezugssignal (ref(k)) bildenden Datenmenge (Xr(0), Xr(1), ..., Xr(n), Yr(0), Yr(1), ..., Yr(n)).

2. Empfänger nach Anspruch 1, **dadurch gekennzeichnet, dass** er eine Schaltung zur Decodierung und kohärenten Integration (10) umfasst, um das Rauschen der durch die Abtasteinrichtungen (17, 18) gelieferten diskreten Daten (d(k)) zu reduzieren.

3. Empfänger nach Anspruch 1 oder 2, **dadurch gekennzeichnet, dass** die Vergleichseinrichtungen (9) FIR-Filterbänke (19, 20, 21, 22) umfassen, deren Koeffizienten Daten sind, die das Bezugssignal (ref(k)) bilden.

4. Empfänger nach einem der vorangehenden Ansprüche, **dadurch gekennzeichnet, dass** er Tiefpassfilter (15, 16) umfasst, angeordnet zwischen den die beiden orthogonalen Signale liefernden Einrichtungen (11, 12) und den Abtasteinrichtungen (17, 18), deren Grenzfrequenz im Wesentlichen gleich der Hälfte der Bandbreite des empfangenen Signals (R(t)) ist.

5. Empfänger nach Anspruch 4, **dadurch gekennzeichnet, dass** die Tiefpassfilter (15, 16) Abgleich- bzw. Entzerrfilter sind.

6. Empfänger nach einem der vorangehenden Ansprüche, **dadurch gekennzeichnet, dass** die Abtastfrequenz der Abtasteinrichtungen (17, 18) im Wesentlichen gleich fp/K3 ist, wobei K3 eine rationale Zahl ist.

7. Empfänger nach einem der Ansprüche 1 bis 5, **dadurch gekennzeichnet, dass** die Abtasteinrichtungen (17, 18) durch eine aperiodische Steuerung bzw. einen aperiodischen Befehl gesteuert werden.

8. Empfänger nach einem der vorangehenden Ansprüche, **dadurch gekennzeichnet, dass** die Ermittlungseinrichtungen (8) zur Berechnung des Bezugssignals (ref(k)) aus physischen Rahmen des empfangenen Signals einen kohärenten Mittelwert berechnen.

9. Empfänger nach einem der vorangehenden Ansprüche, **dadurch gekennzeichnet, dass** er, um die beiden orthogonalen Signale zu liefern, wenigstens ein vor den Einrichtungen (11, 12) geschaltetes Bandsperrfilter (28) umfasst, dessen Mittelfrequenz in der Bandbreite (B) des empfangenen Signals (R(t)) liegt.

10. Empfänger nach Anspruch 9, **dadurch gekennzeichnet, dass** wenigstens ein Bandsperrfilter (28) auf die Mittelfrequenz fc des empfangenen Signals zentriert ist.

11. Empfänger nach einem der vorangehenden Ansprüche, **dadurch gekennzeichnet, dass** er eine Signaldetektionsschaltung (26) umfasst, die eine Norm von wenigstens einem diskreten Datenelement (d(k)) berechnet, sowie eine mit der Detektionsschaltung seriengeschaltete Entscheidungsschaltung (27), die entscheidet, ob - ja oder nein - eine Verarbeitung des empfangenen Signals durchgeführt werden muss oder nicht.

12. Empfänger nach Anspruch 11, **dadurch gekennzeichnet, dass** die Norm gleich dem Quadrat des Moduls der beiden Komponenten (X(k), Y(k)) des diskreten Datenelements ist.

13. Empfänger nach Anspruch 11, **dadurch gekennzeichnet, dass** die Norm gleich dem Maximum der beiden Komponenten (X(k), Y(k)) des diskreten Datenelements ist.

14. Empfänger nach einem der vorangehenden Ansprüche, **dadurch gekennzeichnet, dass** er einen Regelkreis (B) umfasst, der die Phaseninformation (Vφ) als Steuersignal einer Taktschaltung des Empfängers überträgt.

15. Empfänger nach Anspruch 14, **dadurch gekennzeichnet, dass** die Taktschaltung des Empfängers die beiden periodischen orthogonalen Funktionen (a, b) mit der Frequenz fp liefert.

16. Ultrabreitband-Übertragungssystem, einen Impulssequenzen sendenden Sender, einen Empfänger und einen Übertragungskanal zwischen Sender und Empfänger umfassend, **dadurch gekennzeichnet, dass** der Empfänger ein Empfänger nach einem der Ansprüche 1 bis 15 ist.

17. Ultrabreitband-Übertragungssystem nach Anspruch 16, **dadurch gekennzeichnet, dass** die mittlere Periode der gesendeten Impulse gleich K1/fp ist, wobei K1 eine reelle Zahl ist.

18. Ultrabreitband-Übertragungssystem nach Anspruch 17, **dadurch gekennzeichnet, dass** K1 eine ganze Zahl größer als oder gleich 1 ist.

19. Übertragungssystem nach einem der Ansprüche 16 bis 18, **dadurch gekennzeichnet, dass** die Zeitbasis für die Positionsmodulation der gesendeten Impulse im Wesentlichen gleich K2/fp ist, wobei K2 eine reelle Zahl ist.

20. Übertragungssystem nach Anspruch 19, **dadurch gekennzeichnet, dass** K2 eine ganze Zahl größer als oder gleich 1 ist.

21. Empfangsverfahren für Ultrabreitbandsignal (R(t)), gebildet durch eine Impulsfolge, wobei das Verfahren ermöglicht, die die empfangenen Impulse betreffenden Informationen bezüglich Amplitude (Va) und/oder Phase (Vφ) zu liefern, durch Korrelation des empfangenen Signals (R(t)) mit einem Bezugssignal (ref(k)),
**dadurch gekennzeichnet, dass** es umfasst:

  - einen Projektionsschritt (11, 12, 13, 14) des empfangenen Signals (R(t)) auf zwei periodische orthogonale Funktionen (a, b) der Frequenz fp, im Wesentlichen gleich der Mittelfrequenz fc des empfangenen Signals, um zwei orthogonale Funktionen zu liefern,
  - einen Abtastschritt (17, 18) der beiden orthogonalen Signale, um einen Fluss diskreter Daten (d(k)) zu liefern, wobei jedes diskrete Datenelement zwei Komponenten (X(k), Y(k)) hat,
  - ein Ermittlungsschritt (8) zur Berechnung des Bezugssignals (ref(k)) aus dem Fluss diskreter Daten (d(k)), und
  - ein Vergleichsschritt (9, C), der die die empfangenen Impulse betreffenden Informationen bezüglich Amplitude (Va) und/oder Phase (Vφ) liefert, durch Vergleich aller oder eines Teils der in dem Fluss diskreter Daten (d(k)) enthaltenen Informationen mit allen oder einem Teil einer das Bezugssignal (ref(k)) bildenden Datenmenge (Xr(0), Xr(1), ..., Xr(n), Yr(0), Yr(1), ..., Yr(n)).

22. Verfahren nach Anspruch 21, **dadurch gekennzeichnet, dass** es einen Schritt zur Decodierung und kohärenten Integration (10) umfasst, um das Rauschen der durch den Abtastschritt gelieferten diskreten Daten (X(k), Y(k)) zu reduzieren.

23. Verfahren nach einem der Ansprüche 21 oder 22, **dadurch gekennzeichnet, dass** es einen Tiefpassfilterungsschritt (15, 16) der beiden orthogonalen Signale umfasst, wobei die Filterungsbandbreite im Wesentlichen gleich der Bandbreite (B) des Ultrabreitbandsignals (R(t)) ist.

24. Verfahren nach einem der Ansprüche 21 bis 23, **dadurch gekennzeichnet, dass** das Abtasten mit einer Abtastfrequenz von im Wesentlichen gleich fp/K3 erfolgt, wobei K3 eine rationale Zahl ist.

25. Verfahren nach einem der Ansprüche 21 bis 23, **dadurch gekennzeichnet, dass** die Abtastung aperiodisch ist.

26. Verfahren nach einem der Ansprüche 21 bis 25, **dadurch gekennzeichnet, dass** in dem Ermittlungsschritt das Bezugssignal in Form eines kohärenten Mittelwerts der physischen Rahmen des Ultrabreitbandsignals (R(t)) berechnet wird.

27. Verfahren nach einem der Ansprüche 21 bis 26, **dadurch gekennzeichnet, dass** es eine Bandsperrfilterung (28) des Ultrabreitbandsignals umfasst, zentriert auf die Frequenz fc des empfangenen Signals.

28. Verfahren nach Anspruch 27, **dadurch gekennzeichnet, dass** die Mittelfrequenz der Bandsperrfilterung durch eine Steuerschaltung gesteuert wird, welche die Frequenz der beiden periodischen orthogonalen Funktionen steuert.

29. Verfahren nach einem der Ansprüche 21 bis 28, **dadurch gekennzeichnet, dass** es die Berechnung einer Norm von wenigstens einem zweidimensionalen diskreten Datenelement eines empfangenen Signals und einen Entscheidungsschritt umfasst, um zu entscheiden, ob - ja oder nein - eine Verarbeitung des mit dem diskreten Datenelement verbundenen empfangenen Signals durchgeführt werden muss oder nicht.

30. Verfahren nach einem der Ansprüche 21 bis 29, **dadurch gekennzeichnet, dass** es einen Schritt zur Regelung einer Taktschaltung des Empfängers mit Hilfe der Phaseninformation (Vφ) umfasst.

31. Verfahren zur Ultrabreitbandsignalübertragung, ein Verfahren zum Senden von Impulssequenzen und ein Verfahren für den Empfang der gesendeten Impulse umfassend, **dadurch gekennzeichnet, dass** das Verfahren für den Empfang der gesendeten Impulse ein Verfahren nach einem der Ansprüche 21 bis 30 ist.

32. Verfahren zur Ultrabreitbandsignalübertragung nach Anspruch 31, **dadurch gekennzeichnet, dass** die mittlere Periode der gesendeten Impulse gleich K1/fp ist, wobei K1 eine reelle Zahl ist.

33. Verfahren zur Ultrabreitbandsignalübertragung nach Anspruch 32, **dadurch gekennzeichnet, dass** K1 eine ganze Zahl größer als oder gleich 1 ist.

34. Verfahren zur Ultrabreitbandsignalübertragung nach einem der Ansprüche 31 bis 33, **dadurch gekennzeichnet**, das die Zeitbasis zur Positionsmodulation der gesendeten Impulse im Wesentlichen gleich K2/fp ist, wobei K2 eine positive reelle Zahl ist.

**35.** Verfahren zur Ultrabreitbandsignalübertragung nach Anspruch 34, **dadurch gekennzeichnet, dass** K2 eine ganze Zahl größer als oder gleich 1 ist.

**Claims**

**1.** Receiver of an ultra wide band signal (R(t)) composed of a sequence of pulses, the receiver including means (7, 8, 9, C) of outputting amplitude information (Va) and/or phase information (Vφ) related to the received pulses, by correlation of the received signal (R(t)) with a reference signal (ref (k)), **characterized in that** the said means (7, 8, 9, C) comprise:

- means (11, 12, 13, 14) of outputting two orthogonal signals by projection of the received signal (R(t)) onto two periodic orthogonal functions (a, b) with frequency fp approximately equal to the central frequency fc of the received signal,
- means (17, 18) of sampling the two orthogonal signals to output a discrete data stream (d(k)), each discrete data having two components (X(k), Y(k)),
- estimating means (8) for calculating the reference signal (ref (k)) starting from the discrete data stream (d(k)), and
- comparison means (9, C) that output amplitude information (Va) and/or phase information (Vφ) related to received pulses by comparing all or some of the data contained in the discrete data stream (d(k)) with all or part of a set of data (Xr(0), Xr(1), ..., Xr(n), Yr(0), Yr(1), ..., Yr(n)) forming the reference signal (ref (k)).

**2.** Receiver according to claim 1, **characterized in that** it comprises a coherent decoding and integration circuit (10) to reduce discrete data ((k)) noise output by the sampling means (17, 18).

**3.** Receiver according to claim 1 or 2, **characterized in that** the comparison means (9) include finite pulse response filter banks (19, 20, 21, 22) for which the coefficients are data that form the reference signal (ref (k)).

**4.** Receiver according to any one of the preceding claims, **characterized in that** it comprises low pass filters (15, 16) placed between the means (11, 12) of outputting the two orthogonal signals and sampling means (17, 18), and for which the cutoff frequency is equal to approximately half the band width of the received signal (R(t)).

**5.** Receiver according to claim 4, **characterized in that** the low pass filters (15 16) are equalizer filters.

**6.** Receiver according to any one of the preceding claims, **characterized in that** the sampling frequency of the sampling means (17, 18) is equal to approximately fp/K3 where K3 is a rational number.

**7.** Receiver according to any one of the claims 1 to 5, **characterized in that** the sampling means (17, 18) are non-periodically controlled.

**8.** Receiver according to any one of the preceding claims, **characterized in that** the estimating means (8) for calculating the reference signal (ref (k)) calculate a coherent average on the physical frames of the received signal.

**9.** Receiver according to any one of the preceding claims, **characterized in that** it comprises at least one band cutoff filter (28) placed on the input side of the means (11, 12) of outputting the two orthogonal signals and for which the central frequency is within the passband (B) of the received signal (R(t)).

**10.** Receiver according to claim 9, **characterized in that** at least one band cutoff filter (28) is centred on the central frequency (fc) of the received signal.

**11.** Receiver according to any one of the preceding claims, **characterized in that** it comprises a signal detection circuit (26) that calculates a norm with at least one discrete data (d(k)) and a decision stage (27) mounted in series with the detection circuit to decide whether or not to process the received signal associated with the discrete data.

**12.** Receiver according to claim 11, **characterized in that** the norm is equal to the square of the modulus of the two components (X(k), Y(K)) of the discrete data.

**13.** Receiver according to claim 11, **characterized in that** the norm is equal to the maximum of the two components (X(k), Y(K)) of the discrete data.

**14.** Receiver according to any one of the preceding claims, **characterized in that** it comprises a slaving loop (B) that transmits phase information (Vψ) as the control signal for a receiver clock circuit.

**15.** Receiver according to claim 14, **characterized in that** the receiver clock circuit outputs the two periodic orthogonal functions (a, b) with frequency fp.

**16.** Ultra wide band transmission system comprising a transmitter that transmits pulse sequences, a receiver and a transmission channel between the transmitter and the receiver, **characterized in that** the receiver is a receiver according to any one of claims 1 to 15.

**17.** Ultra wide band transmission system according to claim 16, **characterized in that** the average period of the transmitted pulses is equal to K1/fp, where K1 is a real number.

**18.** Ultra wide band transmission system according to claim 17, **characterized in that** K1 is an integer number greater than or equal to 1.

**19.** Ultra wide band transmission system according to any one of claims 16 to 18, **characterized in that** the time base for the position modulation of the transmitted pulses is equal to approximately K2/fp, where K2 is a real number.

**20.** Ultra wide band transmission system according to claim 19, **characterized in that** K2 is an integer number greater than or equal to 1.

**21.** Method for reception of an ultra wide band signal (R(t)) composed of a sequence of pulses, the method being used to output amplitude information (Va) and/or phase information (Vψ) related to received pulses, by correlation of the received signal (R(t)) with a reference signal (ref(k)), **characterized in that** it includes:

- a projection step (11, 12, 13 14) projecting the received signal (R(t)) on two periodic orthogonal functions (a, b) with frequency fp equal to approximately the central frequency fc of the received signal, to output two orthogonal signals,
- a sampling step (17, 18) for the two orthogonal signals to output a discrete data stream (d(k)), each discrete data having two components (X(k), Y(k)),
- an estimated step (8) to calculate the reference signal (ref(k)) from the discrete data stream (d(k)), an
- a comparison step (9, C) that outputs amplitude information (va) and/or phase information (vψ) related to received pulses by comparison of all or some of the data contained in the discrete data stream (d(k)) with all or some of a set of data (Xr(0), Xr(1), ..., Xr(n), Yr(0), Yr(1), ..., Yr(n)) forming the reference signal (ref(k)).

**22.** Method according to claim 21, **characterized in that** it comprises a coherent decoding and integration step (10) to reduce the noise of discrete data (X(k), Y(k)) output from the sampling step.

**23.** Method according to either of claims 21 or 22, **characterized in that** it includes a low pass filtering step (15, 16) of the two orthogonal signals, the filter bandwidth being equal to approximately the bandwidth (B) of the ultra wide band signal (R(t)).

**24.** Method according to any one of claims 21 to 23, **characterized in that** sampling is done at a sampling frequency equal to approximately fp/K3, where K3 is a rational number.

**25.** Method according to any one of claims 21 to 24, **characterized in that** sampling is non-periodic.

**26.** Method according to any one of claims 21 to 25, **characterized in that** during the estimating step, the reference signal is calculated in the form of a coherent average on physical frames of the ultra wide band signa (R(t)).

**27.** Method according to any one of claims 21 to 26, **characterized in that** it includes band cutoff filtering (28) of the ultra wide band signal centred on the frequency fc of the received signal.

**28.** Method according to claim 27, **characterized in that** the central frequency of the band cutoff filtering is controlled by a control circuit that controls the frequency of the two periodic orthogonal functions.

**29.** Method according to any one of claims 21 to 28, **characterized in that** it includes the calculation of a norm for at least one discrete data with two dimensions of a received signal and a decision step to decide whether or not the received signal associated with the discrete data should be processed.

**30.** Method according to any one of claims 21 to 29, **characterized in that** it includes a step to slave a clock circuit of the receiver using phase information (Vψ).

**31.** Method for transmission of an ultra wide band signal including a method for transmitting pulse sequences and a method for receiving transmitted pulses, **characterized in that** the method for reception of transmitted pulses is a method according to any one of claims 21 to 30.

**32.** Method for transmission of an ultra wide band signal according to claim 31, **characterized in that** the average period of transmitted pulses is equal to K1/fp, where K1 is a real number.

**33.** Method for transmission of an ultra wide band signal according to claim 32, **characterized in that** K1 is an integer number greater than or equal to 1.

**34.** Method for transmission of an ultra wide band signal according to any one of claims 31 to 33, **characterized in that** the time base for position modulation of transmitted pulses is equal to approximately K2/fp, where K2 is a positive real number.

**EP 1 482 648 B1**

**35.** Method for transmission of an ultra wide band signal according to claim 34, **characterized in that** K2 is an integer number greater than or equal to 1.

EP 1 482 648 B1

FIG. 1

FIG. 2

FIG. 3

FIG. 4

FIG. 5

FIG. 8

FIG. 6a

FIG. 6b

a,b

a

b

## FIG. 6c

a,b

a

b

t

## FIG. 6d

FIG. 7

EP 1 482 648 B1

FIG. 9

FIG. 10

EP 1 482 648 B1